# EUROPEAN PATENT APPLICATION

(11) **EP 0 943 480 A1**
(43) Date of publication of application: **22.09.1999**
(21) Application number: 98104734.3
(22) Date of filing: 16.03.1998
(51) Int. Cl.: B60L 3/00, B60L 7/04

(54) **Driving device for electric motor-operated vehicle**

(71) Applicant: YAMAHA HATSUDOKI KABUSHIKI KAISHA, Iwata-shi Shizuoka-ken, 438 (JP)
(72) Inventor: Uchiyama, Atsushi, 2500 Shingai, Iwata-Shi, Shizuoka-ken (JP); Tanaka, Hiroshi, 2500 Shingai, Iwata-Shi, Shizuoka-ken (JP)
(74) Representative: Grünecker, Kinkeldey, Stockmair & Schwanhäusser Anwaltssozietät

(57) **Abstract**

A driving unit (1,2) for an electric motor-operated vehicle comprises a battery (3), at least one electric motor (5) for driving wheels, and at least one electric motor driving circuit (6) for supplying electric power from the battery to said at least one motor (5). Further, at least one power generation braking circuit (7) is provided for generating a braking force when said at least one electric motor (5) is rotated by the wheels. In addition, a changing switch (8) is arranged for changing the state of operation between a driving state in which the power generation braking circuit (7) is opened while the electric motor driving circuit (6) is closed, and a braking state in which the power generation braking circuit (7) is closed while the electric motor driving circuit (6) is opened. Moreover, a changing switch control means (10) sets the changing switch (8) to the braking state (8b) when a malfunction occurs in the driving unit (1,2).

## Description

This invention relates to a driving unit for an electric motor-operated vehicle, comprising a battery, at least one electric motor for driving wheels, and at least one electric motor driving circuit for supplying electric power from the battery to said at least one motor.

An electric motor-operated vehicle with a conventional device adapted to produce a braking force as described above is disclosed for example in a Japanese patent No. Hei-4-49321 in which an electric current is applied instantaneously in the counter-rotating direction of the electric motor when a rider sets the accelerator to a stop position.

The above-mentioned conventional device, however, cannot cope with any trouble in the driving device because the braking force is produced on the basis of the rider's operation with the accelerator.

Moreover, according to an internal study, the applicant has proposed an electric motor-operated wheelchair employing a power generation braking circuit for generating braking force when the electric motor is rotated by the rotating force of the wheel, and a changing switch (relay) for changing the state of operation between a driving state in which the power generation braking circuit is opened while the electric motor driving circuit is closed and a braking state in which the power generation braking circuit is closed while the electric motor driving circuit is opened.

With this electric motor-operated vehicle, in particular, wheelchair of the above-mentioned internal proposal, the vehicle may be stopped in the case of any trouble or when electric power is turned off because a braking force is produced when the electric motor is rotated with the wheel as the power generation braking circuit is closed.

However, it may be possible that the above-described electric motor-operated wheelchair is difficult to be moved by hand when the power generation braking circuit is closed. To solve the problem, this electric motor-operated wheelchair may comprise a mechanical clutch interposed between the electric motor and the wheel, and a lever for operating the clutch. A resultant problem could be that the constitution is complicated, especially in a type in which a driving motor is disposed for each of the right and left wheels because the clutch operation lever is required for each of the wheels. As a result, the operator must operate right and left levers. In that case, ease of operation is desirable.

Accordingly, it is an objective of the present invention to provide an improved driving device as indicated above, facilitating with simple technical means an always reliable as well as safe operation of said wheelchair during all of normal or abnormal driving conditions.

According to the present invention, this objective is solved for a driving device as indicated above by at least one power generation braking circuit for generating a braking force when said at least one electric motor is rotated by the wheels, and a changing switch for changing the state of operation between a driving state in which the power generation braking circuit is opened while the electric motor driving circuit is closed, and a braking state in which the power generation braking circuit is closed while the electric motor driving circuit is opened, and by a changing switch control means for setting the changing switch to the braking state when a malfunction occurs in the driving unit.

In order to ease the release of the braking state, a means of simple constitution and operation, it is advantageous when a braking circuit opening and closing means for opening and closing the power generation braking circuit.

In case two different wheels of said vehicle are driven, it is either possible to use only one motor for both wheels or to use a separate motor for each of said wheels. In that case, it is advantageous when said driving unit comprises two driving devices each associated to an electric motor which are adapted to drive separate wheels.

According to the present invention, it is advantageously possible that the braking circuit opening and closing means comprises a first semiconductor switching element interposed in the power generation braking circuit, and an igniting circuit for allowing or interrupting the supply of voltage induced in the power generation braking circuit to the first semiconductor switching element.

In that case, it is advantageous when the first semiconductor switching element is an SCR and that the igniting circuit comprising a second semiconductor switching element being interposed between the gate terminal (9c) of the SCR (9a) and the changing switch, and that the base of the second semiconductor switching element being connected to the battery through a main switch.

Alternatively, it is in that case possible when the first semiconductor switching element is an SCR and that the igniting circuit comprising a mechanical contact point switch for establishing and interrupting a contact in synchronization with the main switch, said contact point switch being interposed between the gate terminal of the SCR and the changing switch.

According to another advantageous embodiment of the present invention, it is possible the braking circuit opening and closing means being interposed in the power generation braking circuit and constituted with a mechanical contact point switch for establishing and interrupting a contact in synchronization with the main switch.

Other preferred embodiments of the present invention are laid down in further dependent claims.

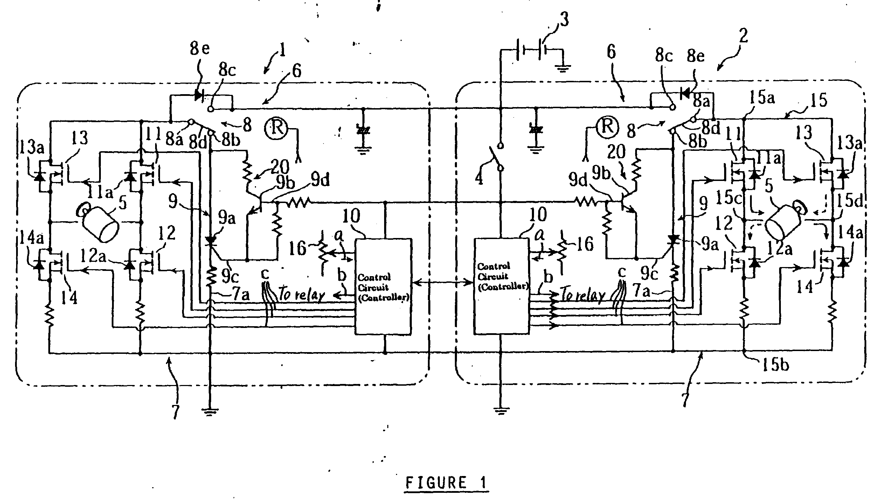

Therefore, according to an embodiment of the invention as shown in FIG. 1, driving devices for an electric motor-operated vehicle comprising;
a battery, electric-motors for driving respective wheels, and electric motor driving circuits for supplying electric power from the battery to respective electric motors, being provided with:
   power generation braking circuits for generating braking force when the electric motors are rotated by the wheels,
   changing switches for changing the state of operation between a driving state in which the power generation braking circuits are opened while the electric motor driving circuits are closed and a braking state in which the power generation braking circuits are closed while the electric motor driving circuits are opened,
   braking circuit opening and closing means for opening and closing the power generation braking circuits, and
   changing switch control means for setting the changing switches to the braking state when a trouble occurs in the driving device.

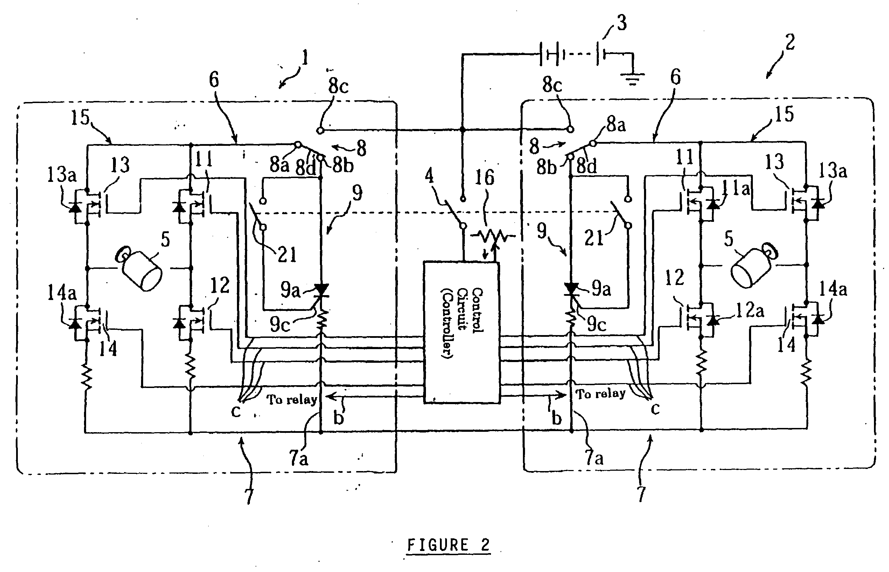

According to another embodiment of the invention as shown in FIG. 2, in the aforementioned driving device the braking circuit opening and closing means comprises a first semiconductor switching element interposed in the power generation braking circuit, and an igniting circuit for making or braking supply of voltage induced in the power generation braking circuit to the first semiconductor switching element.

A further embodiment of the invention relates, as shown in FIG. 1, to the aforementioned driving device, wherein the first semiconductor switching element is an SCR and that the igniting circuit is of a constitution in which a second semiconductor switching element is interposed between the gate terminal of the SCR and the changing switch, and the base of the second semiconductor switching element is connected to the battery through a main switch.

A still further embodiment of the invention relates, as shown in FIG. 2, to the other driving device, wherein the first semiconductor switching element is an SCR and that the igniting circuit is of a constitution in which a mechanical contact point switch for making and braking contact in synchronization with the main switch is interposed between the gate terminal of the SCR and the changing switch.

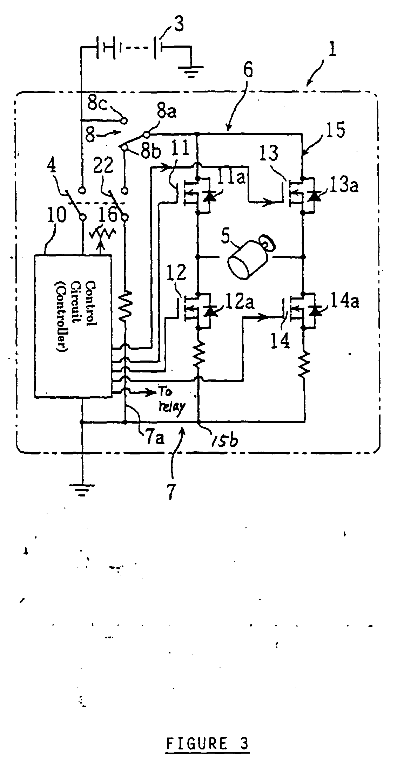

Another embodiment of the invention relates, as shown in FIG. 3, to the aforementioned driving device, wherein the braking circuit opening and closing means is interposed in the power generation braking circuit and constituted with a mechanical contact point switch for making and braking contact in synchronization with the main switch.

In the following, the present invention is explained in greater detail with respect to several embodiments thereof in conjunction with the accompanying drawings, wherein:
FIG. 1 is a block constitution diagram showing a driving device for a motor-operated vehicle as a first embodiment of the invention ;
FIG. 2 is a block constitution diagram showing a driving device for a motor-operated vehicle as a second embodiment of the invention;
FIG. 3 is a block constitution diagram showing a driving device for a motor-operated vehicle as a third embodiment of the invention; and
FIGs 4A and 4B are diagrams illustrating the switching between "high" and "low" of the respective FET for forward and reverse driving, respectively.

An embodiment of the invention will be hereinafter described in reference to the appended drawings and by example of a wheelchair as a vehicle. However, this vehicle also may be a delivery cart, a golf cart, and an electric motor-assisted bicycle.

FIG. 1 is a block diagram for describing a driving device for an electric motor-operated wheelchair as the first embodiment of the invention.

The drawing shows the following components: a driving unit comprising left and right driving devices 1, 2 for driving left and right wheels respectively. The driving devices 1, 2 have an identical constitution except the battery 3 and the main switch 4 are disposed on the side of right driving device 2. That is to say, each of the left and right driving devices 1, 2 comprises; a wheel driving motor 5, a motor driving circuit 6 for supplying power from the battery 3 to the motor 5, a power generation braking circuit 7 for producing a braking force when the motor 5 is driven with the wheel, a relay (changing switch) 8 for changing the state of operation between a driving state in which the power generation braking circuit 7 is opened while the electric motor driving circuit 6 is closed and a braking state in which the power generation braking circuit 7 is closed while the electric motor driving circuit 6 is opened, braking circuit opening and closing means 9 for opening and closing the power generation braking circuit 7, and a control circuit 10 for controlling the operation of the motor driving circuit 6, the power generation braking circuit 7, and the relay 8. The control circuit 10 serves as changing switch control means for setting the relay 8 to the braking state when a trouble occurs in the device.

The motor driving circuit 6 is constituted as follows: FETs 11, 12 are interconnected in series and FETs 13, 14 are interconnected in series, with the former two and the latter two are interconnected in parallel. A motor 5 is interposed between a connection point 15c of the FETs 11, 12 and a connection point 15d of the FETs 13, 14 to form an H-bridge circuit 15. One end 15a of the H-bridge 15 is connected through the relay 8 to the battery 3. Rotation of the motor 5 is controlled by the on-off operation of the FETs 11 to 14. By the way, symbols 11a to 14a are parasitic diodes present in the FETs.

The power generation braking circuit 7 is constituted that both terminals 15a and 15b of the H-bridge circuit 15 are interconnected through a shorting line 7a. The relay 8 comprises a common terminal 8a connected to one terminal 15a of the H-bridge circuit 15, a normally closed terminal 8b connected through the shorting line 7a to the other terminal 15b of the H-bridge circuit 7, and a normally open terminal 8c connected to the positive pole of the battery 3, and excited or de-excited by a relay signal (b) from the control circuit 10 so that a contact point 8d is connected to the normally open terminal 8c or to the normally closed terminal 8b.

The braking circuit opening and closing means 9 comprises an SCR (a first semiconductor switch element) 9a which is interposed in the middle of the shorting line 7a and which, once turned on by the application of gate voltage, remains in the on state until the voltage in the normal direction decreases to zero, and a transistor (a second semiconductor switch element) 9b which constitutes an igniting circuit for making and braking the supply of a voltage produced between the terminals 15a and 15b of the H-bridge circuit 15 to the gate terminal 9c of the SCR 9a. The base 9d of the transistor 9b is connected through the main switch 4 to the positive pole of the battery 3.

When a rider operates a manipulation member (such as a joystick) 16 by tilting it from the neutral position toward front or rear, a tilt angle signal (a) is inputted to the control circuit 10 which in turn outputs a gate signal (c) for driving the vehicle in forward or reverse direction according to the tilt angle signal (a) to the FETs 11 to 13. The control circuit 10 outputs a relay signal (b) to set the relay 8 to the excited state and connect it to the terminal 8c side when the main switch 4 is turned on and besides the manipulation member 16 is tilted, or to set the relay 8 to the de-excited state and connect it to the terminal 8b side when the main switch is turned on and besides the manipulation member 16 is stayed in the neutral position, or when the main switch is turned off or a specified trouble occurs.

Operation of the embodiment will now be described below.

First, when the rider turns on (closes) the main switch 4, the control circuit 10 is energized to start operation. When an operation instruction is given by tilting the manipulation member 16, the relay 8 is set to an excited state with the relay signal (b) from the control circuit 10, the contact point 8d is connected to the terminal 8c side, and the motor driving circuit 6 is electrically connected to the battery 3. As the main switch 4 is turned on, the transistor 9b is also turned on, so that a voltage may be supplied to the gate terminal 9c of the SCR 9a.

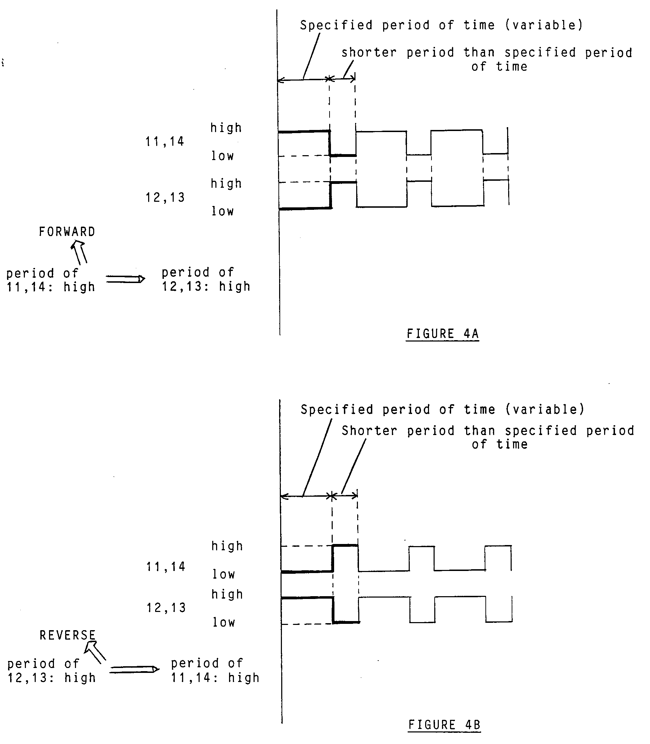

When the rider tilts the manipulation member 16 forward, an instruction speed in the forward direction commensurate with the forward tilt angle is determined and the gate signal (PWM signal) (c) is controlled so that the instruction speed is reached. For example, the following operations are alternately repeated to rotate the motor 5 in the normal direction and to move the wheelchair forward: First, the gate signal of the FETs 11 and 14 is set to a high value, and the gate signal of the FETs 13 and 12 is set to a low value for a specified period of time which is variable. Next, the gate signal of the FETs 11 and 14 is set to a low value, and the gate signal of the FETs 13 and 12 is set to a high value for a specified period of time which is shorter than that of the first operation. Contrary to the above in backing, the motor 5 is reversed by alternately repeating the following operations: the gate signal of the FETs 11 and 14 is set to a low value, and the gate signal of the FETs 13 and 12 is set to a high value for a specified period of time which is variable, then the gate signal of the FETs 11 and 14 is set to a high value, and the gate signal of the FETs 13 and 12 is set to a low value for a specified period of time which is shorter than that of the first operation, as can be seen in Figs. 4A and 4B.

When the rider brings the manipulation member 16 to the neutral position, the control circuit 10 sets the instruction speed to zero, and the gate signal (PWM signal) is set so that the period of time during which the gate signal of the FETs 11 and 14 is set to a high value and the period of time during which the gate signal of the FETs 13 and 12 is set to a high value become the same each other, the rotation of the motor 5 is stopped, the wheelchair stops, and the relay 8 is switched to the terminal 8b side. Here in the stopped state, since the main switch is remained turning on, the relay 8 is in the terminal 8b side, the transistor 9b is also turned on, and therefore the voltage supply to the gate terminal 9c of SCR 9a is feasible, when the wheel chair is moved, SCR 9a is turned on by the generating voltages from the motor, the power generation braking circuit 7 is closed, and braking force is produced.

When any trouble occurs while the wheelchair is moving forward, the relay 8 is set to a de-excited state with the relay signal (b) from the control circuit 10, the contact point 8d is connected to the normally closed terminal 8b side. As a result, the motor driving circuit 6 for supplying battery voltage to the motor 5 is opened, and the H-bridge circuit 15 is disconnected from the battery 3. On the other hand, both terminals 15a and 15b of the H-bridge circuit 15 are shorted through the shorting line 7a.

When the motor 5 is driven with the rotation of the wheel as the wheelchair coasts on momentum, the motor 5 serves as a power generator to produce a voltage between the terminals 15a and 15b. The voltage thus generated is applied to the gate terminal 9c of the SCR 9a through the transistor 9a which is in the on-state by battery voltage. Thus the SCR 9a is turned on to close the power generation braking circuit 7. A current commensurate with the generated voltage flows through the motor 5. This current produces a torque against the rotation of the wheel. As a result, the rotation of the motor 5 is restrained. In other words, in the case of any trouble, power generation braking is carried out so that the wheelchair is decelerated and stopped.

Even though a power failure is occurred due to any trouble in the battery 3, the main switch 4 remains the on-state, so that power generated with the motor turn on the transistor 9b through the diode 8e of the relay 8, and thus the SCR 9a can be turned on. In this case too, power generation braking is carried out.

When the main switch 4 is turned off after the wheelchair has stopped due to any trouble described above, the contact point 8d of the relay 8 remains connected to the terminal 8b, while the transistor 9b is turned off. Also at this time, since the voltage between the terminals 15a and 15b of the H-bridge circuit 15 is zero, the SCR 9a is turned off, and the power generation braking circuit 7 is opened. Therefore, power generation braking does not occur even if the wheelchair is moved by pushing by hand. Thus, the wheelchair may be moved freely.

If the main switch 4 is turned off before the wheelchair comes to a complete stop while the power generation braking is being carried out, the transistor 9b is turned off while the SCR 9a remains on until the voltage between the terminals 15a and 15b of the H-bridge circuit 15 becomes zero, or until the wheelchair comes to a complete stop. As a result, the power generation braking circuit 7 remains closed to produce the braking force.

As described in the above, when the main switch 4 is turned off in a state of that the wheelchair stops as a result of bringing the manipulation member 16 to the neutral position, the voltage supply to the gate terminal 9c of the SCR 9a is not feasible because the igniting circuit transistor 9b of the SCR 9a is turned off even though the relay 8 is in the terminal 8b side. Therefore, SCR 9a remains off-state if the wheelchair is moved, i.e., the power generation braking circuit 7 holds its open, so that the wheelchair may be moved freely.

The embodiment is arranged as described above in the case of any trouble to connect the relay 8 to the terminal 8b side on the power generation braking circuit 7 side, or to cause the braking state. At the same time, the SCR 9a is turned on to close the power generation braking circuit 7. As a result, braking force is produced in the case of any trouble to immediately stop the wheelchair. In this case, since the SCR 9a is turned on with the voltage produced with the power generation braking circuit 7, the power generation braking circuit 7 may be closed even in the case of trouble such as power failure. Furthermore, since the gate 9c of the SCR 9a is indirectly turned on and off with the power source voltage though the transistor 9b, braking forces on both wheels may be applied or released without using lengthy power lines even if the motor driving circuits for both wheels are disposed apart from each other. This simplifies overall constitution.

Since it is arranged that when the wheelchair stops by any trouble, switching off the main switch 4 turns off the igniting circuit transistor 9b of the SCR 9a and causes infeasible voltage supply to the gate terminal 9c of the SCR 9a, thus, SCR 9a is remained the off-state even though the wheelchair is moved, i.e., opening of the power generation braking circuit 7 is prevented, the wheelchair may be brought to the state of being moved freely simply by turning off the main switch 4. As a result, problems of complicated constitution and the operation are avoided.

While the braking circuit opening and closing means 9 of the first embodiment described above is constituted with the SCR 9a and the transistor 9b, the braking circuit opening and closing means 9 of the invention may also employ the constitutions shown in FIGs. 2 and 3. In FIGs 2 and 3, the same symbols as those in FIG. 1 show the same or like parts.

FIG. 2 is a block diagram for describing the second embodiment of the invention. In this second embodiment, the igniting circuit is constituted such that a mechanical contact point type switch 21 which is turned on and off synchronously with the main switch 4 is interposed between the gate terminal 9c of the SCR 9a and the relay (changing switch) 8.

In the second embodiment, at any trouble with the main switch 4 on, since the relay 8 is connected to the terminal 8b side and since the switch 21 is turned on, if the motor 5 is driven by the rotation of the wheels due to coasting of the wheelchair, generating voltage affects the gate terminal 9c of the SCR 9a to turn on the SCR 9a and close the power generation braking circuit 7, so that braking force is produced as the first embodiment.

Since the main switch 4 is turned off after the wheelchair stops, and the switch 21 is also turned off simultaneously, the voltage supply to the gate terminal 9c of SCR 9a become infeasible, therefore, SCR 9a is remained the off-state even though the wheelchair is moved, i.e., opening of the power generation braking circuit 7 is prevented. As the result, no braking force is produced, and the wheelchair may be freely moved.

In the second embodiment, since the SCR 9a is turned on and off with the mechanical contact point type switch 21, as long as the driving circuits may be disposed close to each other, only one semiconductor element suffices, which permits a simple constitution and is favorable for the cost.

FIG. 3 is a block diagram for describing the third embodiment of the invention. This third embodiment is arranged so that only one wheel is driven with the motor. Such an arrangement may be employed for example in; a case in which only the right hand wheel of the first or second embodiments described above is driven with the motor, a case in which the output of a single motor is transmitted through differential gears to both wheels, or a retrofit drive unit provided with a single drive wheel.

In the third embodiment, the braking circuit opening and closing means 9 is constituted by interposing a mechanical contact point type switch 22 which is turned on and off synchronously with the main switch 4 is interposed in the middle of the shorting line 7a making connection between the other end 15b of the H-bridge circuit 15 and the relay (changing switch) 8.

With the third embodiment, in the case of any trouble with the main switch 4 on, since the relay 8 is connected to the terminal 8b side and the switch 22 is turned on, the power generation braking circuit 7 is closed, and braking force is produced when the motor 5 is driven by the rotation of the wheel.

Furthermore, since the switch 22 is turned off simultaneously with turning off the main switch 4, the power generation braking circuit 7 is opened, and no braking force is produced, the wheelchair may be freely moved.

In the third embodiment, since the braking circuit opening and closing means 9 is constituted with the mechanical contact point type switch 22, no semiconductor switch element is required. As a result, the vehicle constitution is simplified and the cost is favorably reduced especially in the case in which only one wheel is driven with a single motor.

According to an embodiment, since the changing switches are provided for changing the state of operation between the driving state in which the power generation braking circuits are opened while the electric motor driving circuits are closed and the braking state in which the power generation braking circuits are closed while the electric motor driving circuits are opened, in the case of any trouble, the wheelchair may be stopped by the braking force produced by opening the motor drive circuit while closing the power generation braking circuit by means of the changing switch.

And since the braking circuit opening and closing means for opening and closing the power generation braking circuit is provided, even if the wheelchair stops in the state of that the changeover switch is changed to the braking state side, once the power generation braking circuit is opened by means of the braking circuit opening and closing means, the wheelchair may be freely moved because no braking force is produced by such a movement.

Further, since the braking circuit opening and closing means may be constituted with the first semiconductor switching element interposed in the power generation braking circuit, and the igniting circuit for making or braking supply of voltage induced in the power generation braking circuit to the first semiconductor switching element, in the case of any trouble, the induced voltage of the motor causes the igniting circuit to turn on the first semiconductor switch element and close the power generation braking circuit. And in the state of the wheelchair at a stop thereafter, turning off the igniting circuit remains the first semiconductor switching element off and prevents the closing of the power generation braking circuit. Thus, the power generation braking in trouble and the free movement of the wheelchair after a stop may be attained. The constitution is made simpler than for example an arrangement in which a mechanical clutch is interposed between the motor and the wheel.

Moreover, since it is possible that the first semiconductor switching element is an SCR and that the igniting circuit may be of a constitution in which the second semiconductor switching element is interposed between the gate terminal of the SCR and the changing switch, and the base of the second semiconductor switching element is connected to the battery through a main switch, in the case of any trouble, the motor excitation voltage turns on the SCR through the second semiconductor switching element, the power generation braking circuit is closed, and the power generation braking is carried out to stop the wheelchair immediately.

When the main switch is turned off in the stopping state of the wheelchair, since the second semiconductor switch element is turned off, and the voltage supply to the gate terminal of the SCR become infeasible, no braking force is produced even though the wheelchair is moved. In this way, in spite of the provision of the power generation braking circuit, the wheelchair may be freely moved once the main switch is simply turned off.

In addition, the mechanical contact point type switch which opens and closes in synchronization with the main switch may be interposed between the gate terminal of the SCR and the changing switch. Therefore, turning-on of the main switch drive the mechanical contact point switch to turn on, the power generation braking circuit is closed due to connection of the changeover switch to the braking circuit side in troubles, and the power generation braking is carried out to immediately stop the wheelchair. By turning off the main switch after the stop, the mechanical contact point type switch is turned off to cause the voltage supply to the gate terminal of the SCR to be infeasible, and closing of the power generation braking circuit is prevented, so that the wheelchair may be freely moved. In this embodiment, only one semiconductor switch element suffices.

Further, the braking circuit opening and closing means may be constituted with the mechanical contact point type switch which is turned on and off in synchronization with the main switch. Therefore, when the main switch is turned on, the mechanical contact point type switch is turned on, the changing switch is connected to the power generation braking circuit side in the case of any trouble, the power generation braking circuit is closed, and the power generation braking is carried out. When the main switch is turned off, the mechanical contact point switch opens the power generation braking circuit so that the wheelchair may be freely moved. In this case, no semiconductor switch element is required, which is favorable for the cost.

## Claims

1. A driving unit (1,2) for an electric motor-operated vehicle, comprising a battery (3), at least one electric motor (5) for driving wheels, and at least one electric motor driving circuit (6) for supplying electric power from the battery to said at least one motor (5), **characterized by** at least one power generation braking circuit (7) for generating a braking force when said at least one electric motor (5) is rotated by the wheels, and a changing switch (8) for changing the state of operation between a driving state in which the power generation braking circuit (7) is opened while the electric motor driving circuit (6) is closed, and a braking state in which the power generation braking circuit (7) is closed while the electric motor driving circuit (6) is opened, and by a changing switch control means (10) for setting the changing switch (8) to the braking state when a malfunction occurs in the driving unit (1,2).

2. A driving unit according to claim 1, **characterized by** a braking circuit opening and closing means (9) for opening and closing the power generation braking circuit (7).

3. A driving unit according to claim 1 or 2, **characterized in that** said driving unit comprising two driving devices (1,2) each associated to an electric motor (5) which are adapted to drive separate wheels.

4. A driving unit according to claim 2 or 3, **characterized in that** the braking circuit opening and closing means (9) comprises a first semiconductor switching element (9a) interposed in the power generation braking circuit (7), and an igniting circuit (20) for allowing or interrupting the supply of voltage induced in the power generation braking circuit (7) to the first semiconductor switching element (9a).

5. A driving unit according to claim 4, **characterized in that** the first semiconductor switching element is an SCR (9a) and that the igniting circuit (20) comprising a second semiconductor switching element (9b) being interposed between the gate terminal (9c) of the SCR (9a) and the changing switch (8), and that the base (9d) of the second semiconductor switching element (9a) being connected to the battery (3) through a main switch (4).

6. A driving unit according to claim 4, **characterized in that** the first semiconductor switching element is an SCR (9a) and that the igniting circuit (20) comprising a mechanical contact point switch (21) for establishing and interrupting a contact in synchronization with the main switch (4), said contact point switch (21) being interposed between the gate terminal (9c) of the SCR (9a) and the changing switch (8).

7. A driving unit according to claim 2, **characterized in that** the braking circuit opening and closing means (9) being interposed in the power generation braking circuit (7) and constituted with a mechanical contact point switch (22) for establishing and interrupting a contact in synchronization with the main switch (4).

8. A driving unit according to at least one of the preceding claims 1 to 7, **characterized in that** said changing switch is a relay (8).

9. A driving unit according to at least one of the preceding claims 1 to 8, **characterized in that** said motor driving circuit (6) further comprising first and second FET (11,12) interconnected in series and third and fourth FET (13,14) interconnected in series, wherein the first and second FET (11,12) are interconnected in parallel with the third and fourth FET (13,14).

10. A driving unit according to claim 9, **characterized in that** said FET (11,12,13,14) together with one electric motor (5) constituting a H-bridge circuit (15).

11. A driving unit according to at least one of the preceding claims 1 to 10, **characterized in that** said vehicle is a wheelchair, a delivery cart, a golf cart or an electric motor-assisted bicycle.
